## Europäisches Patentamt
## European Patent Office
## Office européen des brevets

(11) Veröffentlichungsnummer: **0 133 166**
**A1**

# EUROPÄISCHE PATENTANMELDUNG

(21) Anmeldenummer: 84830066.1

(22) Anmeldetag: 12.03.84

(51) Int. Cl.⁴: **B 60 R 11/02**

(43) Veröffentlichungstag der Anmeldung:
13.02.85 Patentblatt 85/7

(84) Benannte Vertragsstaaten:
BE CH DE FR LI NL SE

(71) Anmelder: **CENTRO AUTORADIO HI-FI**
**Via Malaguti, 4**
**I-40126 Bologna(IT)**

(72) Erfinder: **Alvisi, Adriano H.**
**c.o. "Centro Autoradio Hi-Fi" via Malaguti, 4**
**I-40126 Bologna(IT)**

(74) Vertreter: **Rinaldi, Carlo**
**c.o. Studio Brevetti Nazionali ed Esteri dell'Ing. Carlo**
**Rinaldi & C. s.d.f. Via Aristide Busi, 1**
**I-40137 Bologna(IT)**

(54) **System zur Befestigung von Funkempfängern an Innenräume von Armaturenbrettern oder ähnliche Hohlräume, um den Diebstahl der erwähnten Funkempfänger zu verhindern.**

(57) Es wird ein System zur Befestigung eines Funkempfängers im Innern eines Hohlraumes eines Kraftwagens beschrieben, das dazu dient, den Diebstahl des Funkempfängers zu verhindern; das genannte System besteht aus einem Metallgehäuse (1), das den Funkempfänger maßgenau umfäßt, und aus einer Kiste (15), die das genannte Gehäuse (1) enthält; ein elektrisches Motor (8) treibt einen Nocken (6) an, woran ein Bolzen (5) fest ist, der mit einer aus einem Zusatz (3) des genannten Gehäuses (1) herausgearbeiteten Schlitz (4) ineinandergreift. Die zwei Seitenwände (16 und 18) der Kiste (15) sind je mit einer Längsnut (22 und 23) versehen, die dem genannten Gehäuse (1) zugehörende Wälzrollen (13 und 14) aufnimmt. Eine einbruchsichere Tür (26) ist mittels Koppeln (27 und 28) mit dem genannten Gehäuse (1) verbunden, um die Vorderdurchbrechung (20) der genannten Kiste (15) zuzumachen.

Steuermittel (36 und 37) und Anhaltemittel sind zur Kontrolle des Motors vorgesehen.

Fig. 1

SYSTEM ZUR BEFESTIGUNG VON FUNKEMPFÄNGERN AN INNORÜHR 0133166
VON ARMATURENBRETTEN ODER ÄHNLICHE HOHLRÄUME, UM DEN
DIEBSTAHL VON DEN ERWÄHNTEN FUNKEMPFÄNGERN ZU VERHINDERN

Die Erfindung betrifft ein System zur Befestigung von einem
Funkempfänger im Innern eines Armaturenbrettes oder ähnlich
er Hohlräume eines Kraftwagens, um dessen Diebstahl zu verhindern; besonders bez. eines Systems durch ein elektrome =
chanisches Gerät gesteuert, das unter der Wirkung von elektrischen durch dazubestimmte Druckknöpfe oder Mikroschalter
erzeugten Steuerpulsen so eingreift, daß der evtl.im Innern
eines Metallgehäuses maßgerecht enthaltene Funkempfänger
vor-oder rückwärts fährt und daß gleichzeitig die Tür einer
umfassenden Kiste auf-oder zugeht, die das genannte Gehäuse
enthält; solche Kiste ist an die Innenseite des oben genannt
en Hohlraumes befestigt und besteht aus besonders kräftigem
Material, um ihren Einbruch zu verhindern.
Wie allbekannt, ist keine Optimallösung für die Diebstahlsicherung der auf Kraftwagenen montierten Funkempfänger noch
gefunden worden; deshalb ist der Besitzer des Kraftwagens gezwungen, den Funkempfänger aus dem Hohlraum herauszuziehen,
um dessen Diebstahl zu verhüten, jedesmal wenn er sich aus
dem Wagen entfernt.
Es sind Systeme der gattungsgemäßigen Art zur Befestigung von
Funkempfängern an die entgegennehmenden Hohlräume bekannt,
die Ketten, Hängeschlößer oder ähnliche Schließungen umfassen; jedoch erwiesen sich solche Systeme als wirkungslos dadurch, daß deren Einbruch ziemlich leicht ist.
Dieser Erfindung liegt die Aufgabe zugrunde, den oben erwähnten Nachteilen abzuhelfen.
Die Erfindung,wie bei den Ansprüchen gekennzeichnet,löst die
Aufgabe dadurch, daß ein System zur Befestigung von Funkempfängern im Innern eines im Fahrgastraum vorhandenen Hohlraums
geschaffen ist, das nach Belieben des Kraftwagenbesitzers und
mindestens mittels eines elektromechanischen Geräts denselben vorzugsweise in einem Metallgehäuse maßgerecht enthaltenen Funkempfänger sich nach der Innenseite einer im erwähnten Hohlraum vorgesehenen umfassenden Kiste verschieben läßt,um dieselbe Kiste durch eine einbruchsichere Tür zuschließen;so= wie dadurch, daß das oben genannte elektromechanische Gerät im Fall solches Systems durch dieselbe tragende und schützen= de Kiste unzugänglich gemacht wird; ausserdem besteht das er= wähnte elektromechanische Gerät auch aus einem strukturellen Teil,das genug kräftig ist, um die Wegschaffung des Funkemp= fängers aus dem Hohlraum zu verhindern.

Die von dieser Erfindung gebotenen Vorteile bestehen darin,daß die mit dem Körper des Funkempfängers oder mit dessen Gehäuse durch Koppeln verbundene Tür nicht geöffnet werden kann,wenn der genannte Körper oder das erwähnte Gehäuse sich in einer vorgeschobenen Stellung mit Bezug auf die Kiste nicht befinden, was nur aus dem Willen des Kraftwagenbesitzers ausschließlich erfolgen kann; ausserdem darin, daß solche Elemente vorhanden sind, die die Verschiebungen des genannten Funkempfängers oder des erwähnten Gehäuses unter Bezugnahme auf die Kiste begrenz en; sowie darin, daß das genannte elektromechanische Gerät mit dem Funkempfänger oder mit dessen Gehäuse durch solche Elemen= te verbunden ist, die die Wegschaffung aus der genannten Kiste verhindern. Schließlich unterscheidet sich das System durch seine erhebli= che Kräftigkeit, durch sein elegantes Aussehen und dadurch, daß das elektromechanische Gerät unzugänglich gemacht wird.

Nachfolgend wird die Erfindung anhand lediglich ein Ausführ= ungsbeispiel darstellender und uneinschränkender Zeichnungen ausführlich erläutert. Es zeigt:
- Abb.1 ein Gehäuse, das einen Funkempfänger maßgerecht ent= hält; solches Gehäuse ist mit Elementen versehen, die dafür bestimmt sind, die Verschiebung desselben Gehäuses im Innern einer Kiste zu ermöglichen;

- Abb.2 ein elektromechanisches Gerät, zur Bedienung des in Abb.1 dargestellten Gehäuses geeignet;
- Abb.3 die erwähnte Kiste mit einer durch Koppeln lenkbaren Tür und mit Laufschienen zur Verschiebung des genannten Gehäuses versehen.

Wie in den oben erwähnten Abbildungen dargestellt, enthält eine Gehäuse 1 einen Funkempfänger 2 maßgenau; am Gehäusen= körper ist ein Zusatz 3 fest, welcher einen Schlitz 4 auf= weist; solche Schlitz ist dazu bestimmt, einen Bolzen 5 zu empfangen, der von einem an einer Welle 7 eines elektrischen Motors 8 exzentrisch festen Nocken 6 unterstützt wird.Die Seitenwände 9 und 10 des Gehäuses 1 tragen je zwei Wellen;die Wellen auf der linken Seite 9 sind nicht dargestellt; die Wel len auf der rechten Seite 10 sind bzw. mit 11 und 12 bezeich= net; die Welle 11 stützt ein Kugellager 13 und die Welle 12 ein Kugellager 14 ab; zwei andere ähnlichen Kugellager sind von den nicht dargestellten und der Seite 9 zugehörigen Wellen getragen.

Eine umfassende Kiste 15 hat eine prismatische hohle Form,um das Gehäuse 1 zu empfangen und wiederum innerhalb eines im Innenraum des Kraftwagens vorhandenen Hohlraumes aufgenommen zu werden; solche Kiste ist durch vier Wänden 16, 17, 18 und 19 begrenzt und besteht aus einem besonder kräftigen Material, um das Gehäuse 1 gegen Einbruch zu schützen; ausserdem weist sie eine Öffnung 20 auf ihrer Vorderseite und eine Hinterwand 21 auf, welche mit nicht dargestellten Löchern versehen ist, um das genannte Gehäuse 1 zu belüften und den oben erwähnten Zusatz 3 durchgehen zu lassen.

Auf der Innenseite der Wände 16 und 18 sind zwei Gleitnuten mit 22 und 23 bzw. bezeichnet herausgearbeitet, die von aussen der genannten Kiste 15 als zwei Längsausladungen erscheinen, die mit 24 und 25 bzw. bezeichnet sind; die Nut 22 nimmt die zwei Kugellager 13 und 14 auf; die Nut 23 nimmt die nicht dar gestellten und durch Wand 9 getragenen Kugellager ähnlich auf.

- 4 -

Auf dieser Weise kann das Gehäuse 1 innerhalb der Kiste 15 unter der Wirkung des von einem am Nocken 6 festen Bolzen 5 ausgeübten Schubs vor-und zurückrücken, indem solche Transla= tionsbewegungen mit den Bindungen, die aus den zwei Gleitnu= ten 22 und 23 bestehen, verträglich sind.

Eine Tür 26 ist um ein Gelenk auf dem Vorderende der Seite 19 der genannten Kiste 15 derart drehbar, daß sie sich von einer ersten Stellung, wobei die genannte Öffnung 20 aufgemacht ist, bis auf eine zweite Stellung verschiebt, wobei die genannte Öffnung 20 zugemacht wird. Um solche Bewegungen der Tür 26 zu ermöglichen, sind zwei Koppeln 27 und 28 vorgesehen; die Kop= pel 27 ist um zwei Gelenke 29 und 30 drehbar, die durch das Gehäuse 1 und die Tür 26 bzw. getragen sind; die Koppel 28 ist um zwei Gelenke 31 und 32 drehbar, die durch das Gehäuse 1 und die Tür 26 unterstützt sind; wenn das Gehäuse 1 unter der Wirk ung des vom Bolzen 5 nach das Innere der Kiste 15 ausgeübten Schubes rückt, wird die Tür 26 durch die Koppeln 27 und 28 der art nachgezogen, daß sie die Öffnung 20 völlig zumacht.

Wesentlich ist die Erfindung dadurch gekennzeichnet, daß der Motor 8 unzugänglich gemacht ist, indem er durch nicht darge= stellten Winkelstützen oder ähnliche Einrückvorrichtungen an der Wand 21 befestigt ist; wenn das System aufgestellt worden ist, befindet sich diese Wand 21 im Innern des Armaturenbretts.

Um die Stellung der herausziehbaren Kiste 15 mit Bezug auf die Öffnung des umfassenden Innenraumes zu bestimmen, ist diese Kiste 15 mit einem Rahmen 33 versehen,der die Öffnung 20 um= schließt, ohne den Bewegungen der Tür 26 hinderlich zu sein.

Um dieselbe Kiste 15 an der Innenseite des umfassenden Innen= raumes zu befestigen, ist die Kiste 15 mit zwei an der genann= ten Wand 21 geschweißten Muttern ausgestattet, woran die Enden von zwei Zugstangen angeschraubt werden, die dazu dienen, die herausziehbare Kiste 15 am genannten Innenraum anzuhängen.

Ausserdem weisen die eingangs erwähnten Ausladungen 24 und 25 je einen Schlitz (eine von diesen Schlitzen ist mit 34 bezeich net dargestellt) auf, um das Ende einer Winkelstütze zu empfän

gen, die die Kiste 15 am Hohlraum des Armaturenbretts befestigt.

Der Motor 8 ist durch eine Betätigungseinrichtung elektrisch
gespeist, die nicht dargestellt und mit einem also nicht dargestellten und vom Kraftwagenbesitzer besorgten Druckknopf
elektrisch verbunden ist; solche Betätigungseinrichtung wirkt
nur bei eingesetztem Zündschlüßel oder bei ausgeschaltetem
Diebstahlschutz und ist mit elektrischen Signalen auch von
einem vom Zusatz 3 der Wand 21 getragenen Mikroschalter 35
versorgt, woran zwei Zähne anschlagen, die mit 36 und 37 bzw.
bezeichnet und aus dem genannten Zusatz 3 herausgearbeitet
worden sind. Wenn der Zahn 37 mit dem Mikroschalter 35 in Berührung kimmt, wird die Betätigungseinrichtung mit einem elektrischen Signal versorgt, um die Einspeisung des Motors 8 auszuschalten und dessen Polung derart umzuschalten, daß die folgende vom Kraftwagenbesitzer gewollte Bedienung des Motors 8
darin besteht, das Gehäuse 1 auf die erste Stellung zu verschieben, wobei die Tür 26 geöffnet wird; umgekehrt, wenn der
Zahn 36 mit dem Mikroschalter 36 in Berührung kommt, wird die
selbe Betätigungseinrichtung mit einem elektrischen Signal
versorgt, um die Einspeisung des Motors 8 auszuschalten und
dessen Polung derart umzuschalten, daß die folgende Bedienung
desselben Motors 8 darin besteht, das Gehäuse 1 von der genannten ersten Stellung auf eine zweite Stellung zu verschieben,
wobei die Tür 26 aufgemacht wird.

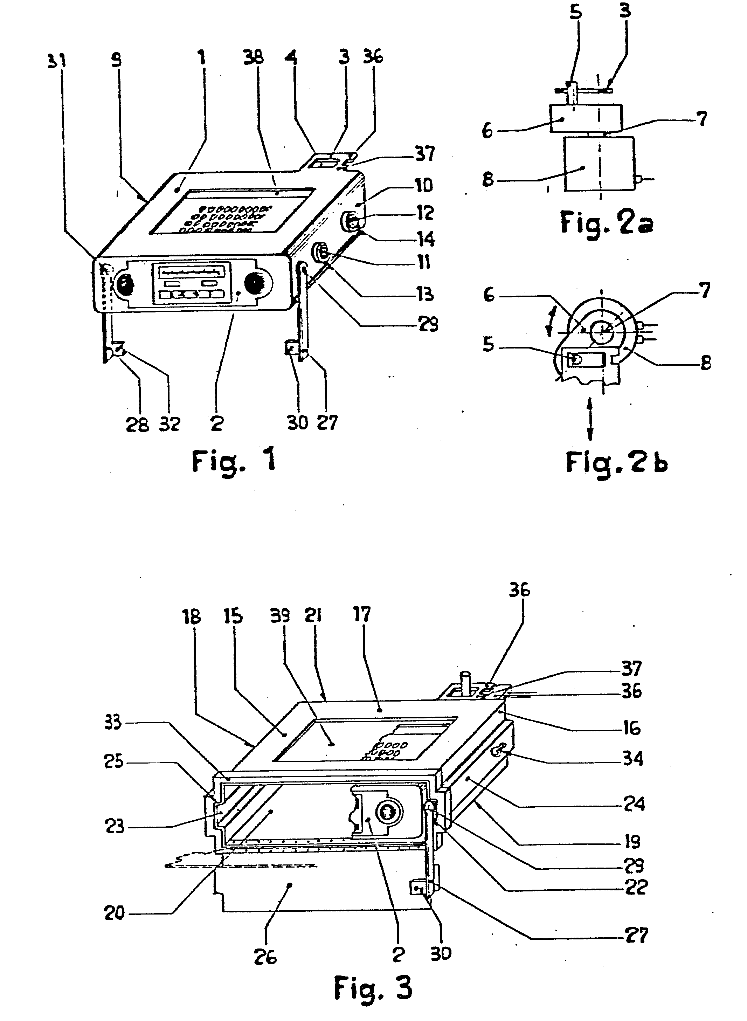

Um die Abkühlung des Funkempfängers 2 während des Betriebs zu
erlauben, werden zwei Durchbrechungen aus Gehäuse 1 und aus
der Kiste 15 herausgearbeitet, wovon zwei in Abb.1 und Abb.3
beobachtet werden können und mit 38 und 39 bzw. bezeichnet
sind.

Die beschriebene Ausführung ist nur eine der vielen möglichen
Verwirklichungen der Erfindung, die konstruktiv verändert werden kann, ohne ihr  Wessen anzugreifen.

Insbesondere kann das Gehäuse, das den Funkempfänger enthält,
derart ausgeführt werden, daß es Bestandteil derselben Hülle

des Funkempfängers im wesentlichen ist.    0133166

Ausserdem können die Gleitelemente zur Verschiebung des Gehäuses im Innern der herausziehbaren Kiste auch konstruktive Veränderungen dahingehend erfahren, daß sowohl deren Zahl als auch
deren Stellung abändert werden können: beispielweise können sie
aus einer aus dem Boden der Kiste 15 herausgearbeiteten Längsnut bestehen, die auf eine erhobene Laufschiene längs der Innen
seite des Bodens der Kiste 15 geleitet wird.

Die zur Translationsbewegung des Gehäuses bestimmten Elemente
auch können Veränderungen im erfinderischen Bereich erfahren;
als Beispiel kann eine Geradschubkurbel angeführt werden, die
das Ziel erreicht, und zwar das Gehäuse verschieben zu machen,
wenn die Kurbel an der Welle des Motors 8 fest ist und die Koppel zwischen der genannten Kurbel und dem erwähnten Gehäuse
um zwei Gelenke drehbar ist.

Als zweites Beispiel, kann die Translation des Gehäuses bis
auf die genannte zweite Stellung durch eine zweckmäßig dimensionierte Feder gesteuert werden, während die Translation desselben Gehäuses bis auf die genannte erste Stellung von einem
durch die Welle eines elektrischen Motors angetriebenen Nocken
verwirklicht wird; auf dem genannten Nocken können Einrückvorrichtungen angeordnet werden, die die gezwungene Translation
des auf der genannten zweiten Stellung befindlichen Gehäuses
nach der genannten ersten Stellung verhindern, indem die Zwangs
öffnung der Tür 26 verhindert wird; solche Einrückvorrichtungen
können aus einem am Nocken festen Bolzen bestehen, der dafür
geeignet ist, in eine aus einem Zusatz des Gehäuses herausgear
beitete Nut eingeleitet zu werden, wenn dasselbe Gehäuse sich
auf der genannten zweiten Stellung befindet.

Als weiteres Beispiel besteht ein Werk aus einer Feder, die das
Gehäuse nach der genannten ersten Stellung schiebt, und aus ein
em Elektromagnet, welcher, wenn erregt, einen am Gehäuse festen
beweglichen Anker rückanzieht, um das Gehäuse auf die genannte
zweite Stellung zu bringen; solches Werk kann mit einschnappend
en Einrückvorrichtungen versehen werden, um eine durch Einbruch der genannten Tür gezwungene Translation des Gehäuses zu verhindern, sowie mit elektronisch gesteuerten Mitteln versehen, um den Elektromagnet zu regeln und ihn nur für die Zeit zu betätigen, die das Gehäuse erfordert, um sich nach der genannten zweiten Stellung zu verschieben.

Anwendungsformen, Materialien und Abmessungen begrenzen den er finderischen Bereich nicht, worin beliebiges konstruktive Element mit einem anderen aus technischen Gründen ähnlichen Element ersetzt werden kann.

1. System zur Befestigung von Funkempfängern an Innenräume von Armaturenbretten oder ähnliche Hohlräume von Kraftwagenen, um den Diebstahl der erwähnten Funkempfängern zu verhindern, d a d u r c h   g e k e n n z e i c h n e t, daß es wenigstens aus einem einen Funkempfänger maßgenau enthaltenden Gehäuse, welches in einer umfassenden herausziehbaren Kiste eingesetzt ist, die wiederum eine Vorderdurchbrechung, vier Seitenwände und eine mit Löchern versehene Hinterwand aufweist; aus Betät igungselementen, die an einer Wand der genannten umfassenden Kiste fest und dafür geeignet sind, das erwähnte Gehäuse von einer ersten mit Bezug auf die Kiste vorgeschobenen Stellung bis auf eine zweite mit Bezug auf die Kiste rückgeschobene Stellung zu bringen,und umgekehrt; aus Gleitelementen, die auf den Seiten der genannten umfassenden Kiste angebracht und dafür geeignet sind, die oben erwähnten Translationsbewegun= gen zu erlauben; aus einer Tür, die durch Koppel mit dem ge= nannten Gehäuse verbunden ist, um die genannte Vorderdurch= brechung aufzumachen, wenn das genannte Gehäuse sich auf der genannten ersten Stellung befindet, und um dieselbe Vorder= durchbrechung zuzumachen, wenn das Gehäuse sich auf der ge= nannten zweiten Stellung befindet; aus einem Rahmen zur Um= schließung des genannten Durchbrechung und dafür geeignet,die Montagestellung der genannten umfassenden Kiste unter Bezug= nahme auf eine der aus der Hohlraumwand herausgearbeiteten Durchbrechung zu bestimmen, um die erwähnte umfassende Kiste in den genannten Hohlraum einzuleiten; aus Mitteln zur Befe= stigung dieser umfassenden Kiste am genannten Hohlraum; aus Steuermitteln zum Abtrieb der oben erwähnten Betätigungsele= mente bei eingesetztem Zündschlüßel oder bei ausgeschaltetem Diebstahlschutz; aus einem Druckknopf, worauf der Kraftwagen= besitzer drücken kann, um die genannten Steuermittel zu betä= tigen; aus Endschaltern, die dafür geeignet sind, die erwähn ten Steuermittel mit elektrischen Signalen zu versorgen, um die Wirkung der Betätigungselemente auszuschalten, wenn das genannte Gehäuse sich auf der genannten ersten oder zweiten Stellung verschoben hat, um die Betätigungselemente dazu vorzubereiten, die Translationsbewegung des Gehäuses umzu= kehren, besteht.

2.System nach Anspruch 1, d a d u r c h  g e k e n n z e i c h n e t, daß die erwähnten Betätigungselemente mit Einrückvor= richtungen versehen werden, die dafür geeignet sind, die ge= zwungene Translation des genannten Gehäuses zu verhindern, mindestens wenn es sich auf der genannten zweiten Stellung befindet.

3.System nach den Ansprüchen 1 und 2, d a d u r c h  g e = k e n n z e i c h n e t, daß die erwähnten Betätigungselemen te aus einem einen Nocken drehenden elektrischen Motor be= stehen,sowie dadurch, daß der Nocken mit einem Bolzen ver= sehen ist, der in eine aus einem am Gehäuse festen Zusatz herausgearbeitete Schlitz einzuleiten ist.

4.System nach den Ansprüchen 1 und 2, d a d u r c h  g e = k e n n z e i c h n e t, daß die erwähnten Betätigungselemen te aus einem elektrischen eine Kurbel drehenden Motor besteh en, sowie dadurch, daß eine Koppel um ein Gelenk zwischen dem genannten Gehäuse und der genannten Kurbel drehbar ist.

5.System nach den Ansprüchen 1 und 2, d a d u r c h  g e = k e n n z e i c h n e t, daß die erwähnten Betätigungselemen te aus einer Zugfeder und aus einem an der Welle eines elek= trischen Motors festen Nocken bestehen, sowie dadurch, daß Einrückvorrichtungen vorhanden sind, um die gezwungene Trans lationsbewegung des Gehäuses zu verhindern, wenn es sich auf der genannten zweiten Stellung befindet.

6.System nach dem von den Ansprüchen 1 und 2 herkommenden An= spruch 5, d a d u r c h  g e k e n n z e i c h n e t, daß die erwähnten Einrückvorrichtungen aus einem am genannten Nocken festen Bolzen bestehen, der dafür geeignet ist, in eine aus einem am genannten Gehäuse festen Zusatz herausge= arbeitete Schlitz eingeleitet zu werden, wenn das genannte Gehäuse sich auf der genannten zweiten Stellung befindet.

7.System nach den Ansprüchen 1 und 2, d a d u r c h   g e= k e n n z e i c h n e t, daß die erwähnten Betätigungsele= mente einen Feder, die dafür geeignet ist, das genannte Ge= häuse nach der genannten ersten Stellung zu schieben, sowie einen Elektromagnet schließen, dessen beweglichen Anker am genannten Gehäuse fest ist; sowie dadurch, daß einschnappen= de Einrückvorrichtungen vorhanden sind, um die gezwungene Translation des Gehäuses durch Einbruch der Tür zu verhin= dern, sowie daß elektronische Steuergeräte versehen sind, um den genannten Elektromagnet nur für die Zeit zu betätigen, die das Gehäuse erfordert, um sich von der genannten ersten Stellung nach der genannten zweiten Stellung zu verschieben.

8.System nach Anspruch 1, d a d u r c h   g e k e n n z e = i c h n e t, daß die erwähnten Gleitelemente aus einer ersten und aus einer zweiten Nut bestehen, die bzw. aus einer ersten und einer zweiten Seitenwand der genannten umfassenden Kiste herausgearbeitet sind; auch dadurch, daß die genannten Nuten dazu bestimmt sind, Wälzrollen mit Drehpunkt auf Achsen an einer ersten und einer zweiten Wand des genannten Gehäuses fest aufzunehmen; auch dadurch, daß die genannte erste und zweite Wand des Gehäuses bzw. nach der ersten und der zweiten Wand der genannten umfassenden Kiste rzuliegen.

9.System nach Anspruch 1, d a d u r c h   g e k e n n z e i c h n e t, daß die erwähnten Gleitelemente aus einer am Boden des genannten Gehäuses herausgearbeiteten Längsnut bestehen, und daß solche Längsnut dafür geeignet ist, in eine im Innern des Bodens der umfassenden Kiste herausgearbeitete erhobene Lauf= schiene eingeleitet zu werden.

Fig. 1

Fig. 2a

Fig. 2b

Fig. 3

Europäisches
Patentamt

EUROPÄISCHER RECHERCHENBERICHT

0133166
Nummer der Anmeldung

EP   84 83 0066

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 066 307   (BARDING) <br> * Zusammenfassung * <br><br> --- | 1 | B 60 R   11/02 |
| A | FR-A-1 242 718   (BLAUPUNKT) <br> * Zusammenfassung * <br><br> --- | 1,7 | |
| A | US-A-4 248 069   (BURBANK) <br> * Spalte 1, Zeilen 44-47 * <br><br> ----- | 1 | |

RECHERCHIERTE SACHGEBIETE (Int. Cl. ³)

B 60 R
H 05 K

Der vorliegende Recherchenbericht wurde für alle Patentansprüche erstellt.

| Recherchenort | Abschlußdatum der Recherche | Prüfer |
|---|---|---|
| DEN HAAG | 06-06-1984 | SCHMITTER J.M. |